# EUROPÄISCHE PATENTSCHRIFT

(11) **EP 2 292 405 B1**
(45) Veröffentlichungstag und Bekanntmachung des Hinweises auf die Patenterteilung: **01.05.2013**
(21) Anmeldenummer: 10174587.5
(22) Anmeldetag: 31.08.2010
(51) Int. Cl.: B29C 49/48, B29C 49/06

(54) **Verfahren und Vorrichtung zur Montage und/oder Demontage von Blasformen**
Method and device for assembling and/or disassembling blow moulds
Procédé et dispositif de montage et/ou de démontage de moules de soufflage

(30) Priorität: 02.09.2009 DE 102009039699
(43) Veröffentlichungstag der Anmeldung: 09.03.2011
(73) Patentinhaber: Krones AG, 93073 Neutraubling (DE)
(72) Erfinder: Senn, Konrad, 93059 Regensburg (DE)
(74) Vertreter: Bittner, Bernhard

(56) Entgegenhaltungen:
- WO-A1-2007/012308
- DD-A1- 250 495
- DE-A1- 10 152 050
- DE-C1- 3 613 543
- FR-A1- 2 921 010
- US-A1- 2004 202 745

## Beschreibung

Die vorliegende Erfindung bezieht sich auf eine Umformeinrichtung zum Umformen von Kunststoffvorformlingen zu Kunststoffbehältnissen sowie ein Verfahren zur Montage / Demontage hierzu gehöriger Blasformen. Im Stand der Technik sind seit längerer Zeit Umformungseinrichtungen wie beispielsweise Blasumformungseinrichtungen bekannt, welche Kunststoffvorformlinge zu Kunststoffbehältnissen umformen. Zu diesem Zweck weisen derartige Vorrichtungen üblicherweise so genannte Blasformen auf, welche zusammengeklappt werden können und in ihrem Inneren einen Hohlraum ausbilden, der zur Expansion eines Kunststoffvorformlings gegen die Wandung des Hohlraumes dient, um so Kunststoffbehältnisse zu erzeugen.

Diese Blasformen weisen daher üblicherweise zwei Blasformhälften auf, die in entsprechenden Blasformenträgern angeordnet werden.

Falls eine entsprechende Vorrichtung auf andere Flaschentypen umgerüstet werden soll ist hierzu erforderlich, dass die Blasformen von dem Blasformträger entnommen und durch andere Blasformen ersetzt werden. Dieser von Hand durchgeführte Vorgang ist dabei relativ zeitintensiv, da insbesondere für eine Vielzahl von Blasstationen jede einzelne Blasform von ihrem Träger entnommen werden muss.

Aus diesem Grunde sind aus dem Stand der Technik diverse Koppelmechanismen bekannt, welche ein möglichst schnelles Trennen der Blasformen von ihren Formträgern erlauben. Derartige Schnelllösemechanismen ermöglichen dabei zum Teil eine sehr zügige Auswechslung der jeweiligen Blasformen. Gleichwohl wird nach noch schnelleren Möglichkeiten für derartige Blasformwechsel gesucht. Daneben werden die Blasformen üblicherweise mit Temperiermedien, z.B. für eine Halskühlung der Vorformlinge oder eine Temperierung der Bodenform betrieben. Auch diese Zuführungen für die Temperiermedien müssen dabei üblicherweise manuell getrennt bzw. wieder verbunden werden.

Die DE 3613543 C1 zeigt eine Schnellspanneinheit zum Festlegen oder Lösen von Formhälften einer Blasform an als Spannplatten ausgelegten Formhälften-Trägern. Die Formhälften umfassen an ihren der Spannplatte zugewandten Seite vier Haltebolzen, welche durch Bohrungen in den Spannplatten hindurch steckbar sind. Die Haltebolzen weisen Köpfe auf, welche auf der den Formhälften abgewandten Spanplattenseiten von hydraulisch betätigbaren Spannstücken hintergriffen werden können, um die jeweilige Formhälfte an den dazugehörigen Formhälften-Träger federkraftbeaufschlagt heranziehen zu können.

Der folgenden Erfindung liegt daher die Aufgabe zu Grunde, die Montage / Demontage von derartigen Blasformen schneller zu gestalten. Eine weitere Aufgabe ist darin zu sehen, derartige Blasformwechsel gegebenenfalls auch automatisiert durchzuführen.

Diese Aufgaben werden erfindungsgemäß durch die Gegenstände der unabhängigen Ansprüche erreicht. Vorteilhafte Ausführungsformen und Weiterbildungen sind Gegenstand der Unteransprüche.

Bei einem erfindungsgemäßen Verfahren zum Betreiben einer Umformeinrichtung zum Umformen von Kunststoffvorformlingen zu Kunststoffbehältnissen weist diese Umformeinrichtung wenigstens einen Blasformträger und eine an diesem Blasformträger angeordnete mehrteilige Blasform auf. Weiterhin ist eine haltende Verbindung zwischen der Blasform und dem Blasformträger vorgesehen.

Erfindungsgemäß wird die haltende Verbindung zwischen dem Blasformträger und der Blasform oder eine Temperierverbindung zum Temperieren der Umformeinrichtung und insbesondere der Blasform wenigstens teilweise automatisiert gelöst (bzw. getrennt) oder hergestellt. Bevorzugt wird die haltende Verbindung zwischen dem Blasformträger und der Blasform vollständig automatisiert gelöst (bzw. getrennt) oder hergestellt. Des Weiteren wird erfindungsgemäß das Trennen oder Herstellen der haltenden Verbindung zwischen dem Blas formträger und der Blasform oder das Trennen oder Herstelen der Temperierverbindung zum Temperieren der Blasform durch eine Bewegung des Blasformträgers entlang einer kreisförmigen Bahn bewirkt.

Bei der genannten Temperierverbindung handelt es sich bevorzugt um eine Strömungsverbidung, welche die Blasform mit einem Temperiermedium versorgt, es kann sich bei der Temperierverbindung jedoch auch beispielsweise um eine elektrisch leitende Verbindung handeln, mit der elektrische Heiz oder Kühlelemente (wie beispielsweise Peltierelemente) zum Temperieren der Blasform mit elektrischer Energie versorgt werden.

Vorteilhaft weist die Blasform wenigstens einen Kanal zum Führen eines Temperiermediums für die Blasform auf, sowie wenigstens einen von dem Kanal trennbaren Anschluss, um dem Kanal das Temperiermedium zuzuführen, wobei eine Strömungsverbindung zwischen dem Anschluss und dem Kanal wenigstens teilweise automatisiert gelöst (bzw. getrennt) oder hergestellt wird

Im Gegensatz zum Stand der Technik wird daher vorgeschlagen, dass die Demontage der Blasform zumindest teilweise automatisiert durchgeführt wird. Eine derartige automatisierte Demontage war bisher nicht gewünscht, da stets die einzelnen Bestandteile der Blasform manuell entnommen worden waren und daher eine Automatisierung keinen Zeitvorteil mit sich gebracht hätte. Vielmehr hätte eine derartige Automatisierung zu einem höheren Sicherheitsrisiko ohne damit verbundenen Nutzen führen können.

Dabei ist es möglich, dass während eines Demontagebetriebs sowohl die haltende die Verbindung zwischen der Blasform und dem Blasformträger als auch die Strömungsverbindung automatisiert getrennt werden aber es wäre auch möglich, dass nur eine dieser Verbindungen automatisch getrennt bzw. hergestellt wird. Entsprechend ist es auch möglich, dass im Rahmen eines Montagebetriebs sowohl die haltende Verbindung zwischen der Blasform und dem Blasformträger als auch die Strömungsverbindung automatisiert hergestellt werden aber es wäre auch möglich, dass nur eine dieser Verbindungen automatisch hergestellt wird.

Durch die automatisierte Entnahme oder Demontage können die entsprechenden Wechselzeiten verringert werden. Bei der haltenden Verbindung kann es sich beispielsweise um eine mechanisch haltende Verbindung handeln, welche beispielsweise durch form- oder kraftschlüssige Mittel im Arbeitsbetrieb die Blasform an den Blasformträgern hält. Bei der haltenden Verbindung zwischen der Blasform bzw. den Blasformteilen und dem Blasformträger bzw. den Blasformträgerteilen kann es sich jedoch auch um eine magnetische Verbindung oder dergleichen handeln.

Vorteilhaft wird die Blasform in einem wenigstens teilweise zusammengesetzten Zustand von dem - bevorzugt mehrteilig ausgebildeten - Blasformträger getrennt. Unter einem teilweise zusammengesetzten Zustand der Blasform wird dabei verstanden, dass die einzelnen Bestandteile der Blasform und insbesondere die Seitenteile der Blasform sowie ggfs auch das Bodenteil in einem definierten räumlichen Verhältnis zueinander aus dem Blasformträger entnommen werden und insbesondere nicht unabhängig voneinander entnommen werden.

Durch diese Vorgehensweise kann die automatische Montage und/oder Demontage der Blasform erheblich vereinfacht werden.

Es wird daraufhin gewiesen, dass das erfindungsgemäße Verfahren auch entsprechende Anwendung auf die Montage von Blasformen Anwendung finden kann, indem eine Blasform in wenigstens teilweise zusammengesetzten Zustand mit dem Blasformträger verbunden wird.

Durch die erfindungsgemäße Vorgehensweise ist es auch möglich, einen auch im Arbeitsbetrieb der Vorrichtung nötigen Öffnungsvorgang der Blasformträger zu nutzen um die Blasform aus den Trägern zu entnehmen. Bei dem bevorzugten Verfahren wird in einem ersten Verfahrensschritt die Blasform von dem Blasformträger getrennt und anschließend die Blasform in wenigstens teilweise zusammengesetzten Zustand von der Umformeinrichtung entfernt.

Bei einer weiteren vorteilhaften Ausführungsform weist die Blasform ein Bodenteil auf und dieses Bodenteil ist bevorzugt an wenigstens einer Blasformhälfte befestigt, während die Blasform von dem Blasformträger getrennt wird. Vorteilhaft weisen die beiden Blasformhälften Ausnehmungen auf, welche das Bodenteil aufnehmen und beispielsweise zwischen sich einspannen. So ist es möglich, dass das Bodenteil an beiden Blasformhälften angeordnet und insbesondere in beide Blasformhälften eingehängt ist.

Bei einem weiteren bevorzugten Verfahren werden die Blasformhälften derart an dem Bodenteil arretiert, dass sich der Formträger beim Öffnen desselben von den Blasformhältften löst. So kann vorgesehen sein, dass in einem speziellen Montage- oder Demontage - Betrieb der Umformeinrichtung zunächst eine Verriegelung zwischen dem Formträger und der Blasform geöffnet wird und anschließend die Formträger geöffnet werden und schließlich die Blasform entnommen wird.

Bei dem erfindungsgemäßen Verfahren wird das Trennen oder Herstellen der haltenden Verbindung zwischen dem Blasformträger und der Blasform oder bevorzugt das Trennen oder Herstellen der Strömungsverbindung zwischen dem Anschluss und dem Kanal durch eine Bewegung des Blasformträgers bewirkt. Erfindungsgemäß handelt es sich dabei um eine Bewegung entlang einer kreisförmigen Bahn.

Dies bedeutet, dass für die Demontage bzw. Montage eine Bewegung des Blasformträgers und insbesondere eine Transportbewegung also insbesondere keine Öffnungs- oder Schließbewegung des Blasformträgers verwendet wird und insbesondere eine solche Bewegung, die hinsichtlich ihrer Bewegungsrichtung auch im Rahmen eines Arbeitsbetriebs vorliegt. So ist es beispielsweise möglich, dass mehrere Blasstationen mit Blasformträgern an einem Blasrad transportiert werden und diese Transportbewegung an dem Blasrad auch in einem Montage- und/oder Demontagebetrieb verwendet wird.

Bevorzugt ist diese Bewegung des Blasformträgers, welche zum Lösen oder Herstellen der obigen Verbindungen führt, eine kontinuierliche Bewegung. Damit wird hier vorgeschlagen, dass auch die Demontage oder Montage in einem kontinuierlichen Betrieb vorgenommen wird. So ist es möglich, dass ein Blasrad, an dem eine Vielzahl von Blasstationen angeordnet ist, kontinuierlich bewegt bzw. gedreht wird um die Demontage oder Montage der Blasformen bzw. die Trennung und das Herstellen der Strömungsverbindungen vorzunehmen.

So könnte im Anschluss an einen Arbeitsbetrieb der Maschine in einem Demontagebetrieb das Blasrad weiterhin kontinuierlich gedreht werden und so die Blasformträger in einer kontinuierlichen Bewegung gegenüber einer oder mehreren Führungskurven bewegt werden.

Bei einem weiteren vorteilhaften Verfahren werden das Trennen oder Herstellen der haltenden Verbindung zwischen dem Blasformträger und der Blasform und das Trennen oder Herstellen der Strömungsverbindung zwischen dem Anschluss und dem Kanal in einem gemeinsamen Arbeitsgang bewirkt. Auf diese Weise kann die Effizienz des Demontage- bzw. Montagevorgangs noch weiter erhöht werden. So können beispielsweise die Trennung der haltenden Verbindung und die Trennung der Strömungsverbindung im Wesentlichen zeitgleich bzw. durch die gleiche Bewegung des Blasformträgers bewirkt werden.
Daneben wäre es auch möglich, dass die besagten Arbeitsgänge mit der gleichen Führungskurve realisiert werden.

Bei einem weiteren vorteilhaften Verfahren wird wenigstens zum Trennen oder zum Herstellen der haltenden Verbindung oder der Strömungsverbindung zwischen dem Kanal und dem Anschluss eine erste Führungseinrichtung verwendet. Bei dieser Führungseinrichtung kann es sich beispielsweise um eine Führungskurve handeln gegenüber der die Blasformen bzw. das Blasrad beweglich angeordnet sind. Durch die relative Bewegung des Formträgers gegenüber feststehenden Kurven kann sowohl die Form als auch alle Wasseranschlüsse kurvengesteuert gelöst und fixiert werden. Es müssen aber nicht unbedingt Führungskurven als Führungseinrichtungen verwendet werden, es wäre auch denkbar das ein Hebel der am Formträger montiert ist, über einen feststehenden (ggfs. jedoch auch zustellbaren) Anschlagbolzen bewegt wird.

Bei einem weiteren vorteilhaften Verfahren wird die Führungskurve zum Trennen der haltenden Verbindung oder zum Trennen des Anschlusses von dem Kanal (genauer gesagt zur Einleitung dieses Vorgangs also zu Beginn eines Montage- oder Demontagebetriebs) bewegt. Dabei ist es beispielsweise möglich, dass die Führungskurve zur Durchführung eines Montage- oder Demontagebetriebs auf die Maschine bzw. das Blasrad zugestellt wird.

Die Fixierung bzw. das Herstellen der Verbindung erfolgt vorteilhaft über Kurve, die für den Wechselbetrieb zustellbar ist und im normalen Betrieb nicht eingreift. Die Zustellung erfolgt bevorzugt per Hand oder automatisch (z.B. pneumatisch, elektrisch, hydraulisch oder magnetisch). Vorteilhaft wird über eine Sicherheitsabfrage sichergestellt, dass kein Normbetrieb mit zugestellter Kurve aufgenommen werden kann. Das Fixieren kann direkt von der Kurve aus oder auch mit beweglichen Hebeln oder verschiebbaren Kurven aus geschehen. In entsprechender Weise kann auch in einem Demontagebetrieb, also beim Lösen der haltenden Verbindung und/oder der Strömungsverbindung verfahren werden.

Bei einem weiteren vorteilhaften Verfahren weist die Blasform ein Bodenteil auf und wenigstens ein Anschluss für ein Temperiermedium wird automatisiert mit dem Bodenteil verbunden oder von dem Bodenteil getrennt. Auch wäre es möglich, dass sowohl in den Seitenteilen der Blasform als auch in dem Bodenteil Kanäle für Temperiermedien vorgesehen sind.

Die Blasformhälften sind vorteilhaft symmetrisch zueinander ausgebildet. Auch ist es möglich, dass die Blasformhälften zur gemeinsamen Aufnahme einer weiteren Mutterform dienen, innerhalb derer die Kunststoffvorformlinge zu den Kunststoffbehältnissen expandiert werden.

Die vorliegende Erfindung ist weiterhin auf eine Umformeinrichtung zum Umformen von Kunststoffvorformlingen zu Kunststoffbehältnissen mit einer mehrteilig ausgebildeten Blasform gerichtet, welche einen Hohlraum ausbildet, innerhalb dessen die Kunststoffvorformlinge zu Kunststoffbehältnissen expandierbar sind, wobei die Umformeinrichtung einen Blasformträger aufweist, an dem die Blasform über eine haltende Verbindung lösbar angeordnet ist und wobei die Blasform vorteilhaft wenigstens einen Kanal zum Führen eines Temperiermediums aufweist, und die Umformeinrichtung vorteilhaft wenigstens einen von dem Kanal trennbaren Anschluss, um dem Kanal das Temperiermedium zuzuführen.

Erfindungsgemäß weist die Umformeinrichtung wenigstens eine Kopplungseinrichtung zum wenigstens teilweisen Trennen oder Herstellung einer haltenden Verbindung zwischen dem Blasformträger und der Blasform oder zum wenigstens teilweisen Trennen oder Herstellen einer Strömungsverbindung zwischen dem Anschluss und dem Kanal auf.

Bei einer weiteren vorteilhaften Ausführungsform steht der Blasformträger über einen - vorteilhaft automatisch - lösbaren Verbindungsmechanismus mit der Blasform in Verbindung. Damit wird vorteilhaft zunächst dieser Verbindungsmechanismus im Falle einer Demontage gelöst, um anschließend (insbesondere nach dem Öffnen des Blasformträgers) die Blasform zu entnehmen. Im Falle der Montage wird vorteilhaft zunächst die Blasform zwischen die Blasformträger eingesetzt und anschließend wird der lösbare Verbindungsmechanismus verriegelt um die beiden Blasformhälften in dem Formträger anzuordnen.

Bei einer weiteren vorteilhaften Ausführungsform sind zwei Teile der Blasform, insbesondere während der Montage oder der Demontage von dem Blasformträger unmittelbar aneinander mit einem Haltemittel befestigt.

Vorteilhaft weist die Kopplungseinrichtung wenigstens eine erste Führungseinrichtung auf, gegenüber der der Blasformträger beweglich angeordnet ist. Wie oben erwähnt, kann diese Führungseinrichtung eine Führungskurve sein aber auch ein Bolzen, der etwa einen Hebel an dem Blasformträger bewegt.

Bevorzugt ist die Führungseinrichtung beweglich. Während im Stand der Technik derartige Führungseinrichtungen wie Führungskurven stationär angeordnet sind, wird hier vorgeschlagen, dass die Führungseinrichtung beweglich ist, um insbesondere in einem Montage- bzw. Demontagebetrieb zugestellt zu werden.

Vorteilhaft weist die Kopplungseinrichtung eine zweite Führungseinrichtung auf gegenüber der der Blasformträger beweglich angeordnet ist. So könnte die erste Führungseinrichtung zur Demontage der Blasform und die zweite Führungseinrichtung zu deren Montage eingesetzt werden. Auch könnten mehrere Führungseinrichtungen vorgesehen sein, welche beispielsweise zur Trennung der haltenden Verbindung, zur Trennung der Strömungsverbindung, zum Herstellen der haltenden Verbindung und zum Herstellen der Strömungsverbindung eingesetzt werden.

Bevorzugt dient die erste Führungseinrichtung zum wenigstens teilweisen Trennen der haltenden Verbindung zwischen dem Blasformträger und der Blasform und/oder zum wenigstens teilweisen Trennen einer Strömungsverbindung zwischen dem Anschluss und dem Kanal und die zweite Führungseinrichtung zum wenigstens teilweisen Herstellen der haltenden Verbindung zwischen dem Blasformträger und der Blasform und/oder zum wenigstens teilweisen Herstellen der Strömungsverbindung zwischen dem Anschluss und dem Kanal.

Vorteilhaft ist zwischen der Blasform und dem Blasformträger ein Haltemittel vorgesehen, welches in einem Arbeitsbetrieb die Blasform an dem Blasformträger hält, wobei dieses Haltemittel in einer radialen Richtung bewegbar ist. Durch diese radiale Bewegung des Haltemittels oder eines Teils dieses Haltemittels kann besonders vorteilhaft die haltende Verbindung zwischen dem Blasformträger und der Blasform bzw. deren Teilen getrennt oder hergestellt werden.

Bevorzugt ist der Anschluss in einer Längsrichtung der Blasform bewegbar. Auf diese Weise kann beispielsweise die Strömungsverbindung zum Zuführen des Temperiermediums getrennt oder hergestellt werden. Vorteilhaft ist eine Ventileinrichtung vorgesehen, welche nach einer Trennung der Strömungsverbindung zwischen dem Anschluss und dem Kanal einen weiteren Medienfluss unterbindet. So kann beispielsweise in dem Anschluss ein Ventil vorgesehen sein, welches sich schließt, sobald der Anschluss getrennt wird.

Weitere Vorteile und Ausführungsformen ergeben sich aus den beigefügten Figuren:

Dabei zeigen:
- Fig. 1: eine schematische Darstellung eines Blasformträgers mit einer Blasform;
- Fig. 2a - 2b: zwei Darstellungen zur Veranschaulichung der Montage und Demontage der Blasform;
- Fig. 3a - 3d: zwei Darstellungen zur Veranschaulichung der Montage und Demontage der Blasform;
- Fig. 4: eine Darstellung zur Veranschaulichung der Trennung der Strömungsver- bindung; und
- Fig. 5: eine weitere Darstellung zur Veranschaulichung der Trennung der Strö- mungsverbindung;

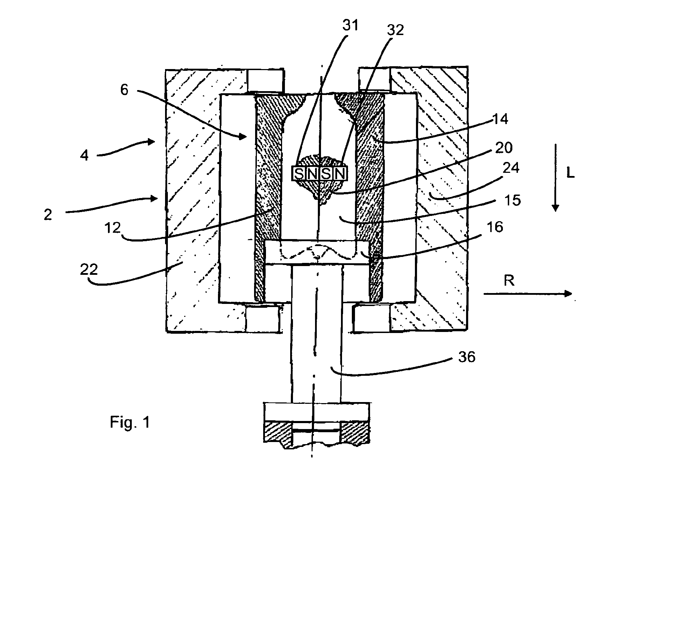

Fig. 1 zeigt eine grob schematische Darstellung einer Blasstation 2. Diese Blasstation 2 weist hier einen in seiner Gesamtheit mit 4 bezeichneten Blasformträger auf. Dieser Blasformträger weist zwei Trägerhälften 22 und 24 auf, welche im Arbeitsbetrieb die Blasform aufnehmen. Genauer setzt sich die Blasform 6 ebenfalls aus zwei Blasformteilen bzw. Blasformhälften 12 und 14 zusammen, wobei die erste Blasformhälfte 12 an einer ersten Trägerhälfte 22 befestigt ist und eine zweite Blasformhälfte 14 an einer zweiten Trägerhälfte 24. Ein entsprechender Befestigungsmechanismus ist in Fig. 1 jedoch nicht dargestellt.

Weiterhin weist die Blasform 6 noch ein Bodenteil 16 auf, welches gemeinsam mit den beiden Blasformteilen 12 und 14 einen Hohlraum 15 ausbildet, innerhalb dem (nicht gezeigte) Kunststoffvorformlinge zu den Behältnissen expandiert werden. Das Bezugszeichen 36 bezieht sich auf ein Zustellelement, welches das Bodenteil 16 in einem Arbeitsbetrieb an die beiden Seitenteile 12 und 14 der Blasform heranführt.

Das Bezugszeichen 20 zeigt grob schematisch eine Befestigungseinrichtung, welche die beiden Blasformhälften zur Entnahme der Blasform in einem geschlossenen Zustand aneinander befestigt. Dabei kann es sich beispielsweise um entgegengesetzt polarisierte Magneten handeln, welche die beiden Blasformhälften aneinander halten. Um zu verhindern, dass die Blasformhälften auch im Arbeitsbetrieb aneinander gehalten werden sind unterschiedliche Möglichkeiten denkbar. So könnte beispielsweise einer der beiden Magneten gegenüber dem anderen in einer Längsrichtung L der Blasform verschiebbar sein, so dass im Arbeitsbetrieb keine Magnetkraft zwischen den beiden Blasformteilen 12 und 14 entsteht. Weiterhin wäre es auch möglich, dass einer oder beide Magneten in radialer Richtung R der Blasform jeweils nach innen verschoben wird so dass ebenfalls eine Magnetkraft im Arbeitsbetrieb zwischen den beiden Blasformteilen 12 und 14 minimiert oder auf null reduziert wird.

Die Befestigungseinrichtung setzt sich also hier aus mindestens zwei Magneten 31, 32 zusammen, wobei der Magnet 31 an der ersten Blasformhälfte 12 und der andere Magnet an der zweiten Blasformhälfte 14 angeordnet ist. So könnten die beiden Blasformhälften Ausnehmungen aufweisen, in denen die beiden Magneten 31, 32 angeordnet sind. Auch könnte nur ein Magnet vorgesehen sein, der einen magnetischen Abschnitt der jeweils anderen Blasformhälfte anzieht. Die Magneten könnten auch in einer Längsrichtung L der Blasform verschiebbar sein, um den magnetischen Halt zu lösen bzw. zu bilden.

Daneben wären jedoch vorteilhaft auch andere (insbesondere mechanische) Halteelemente denkbar, welche die beiden Blasformteile 12, 14 aneinander halten wie beispielsweise mechanische Halteriegel oder dergleichen mit denen nach Wunsch die beiden Blasformhälften miteinander gekoppelt werden können. Derartige Verriegelungselemente könnten auch automatisch, beispielsweise über eine Führungskurve, angesteuert werden.

Wie erwähnt, wird in einem Demontagebetrieb zunächst der Blasformträger 4 von der Blasform 6 gelöst und anschließend kann die Blasform in ihrer Gesamtheit aus der Maschine entnommen werden. Es wäre jedoch auch eine Entnahme in Längsrichtung d.h. senkrecht zu der Figurenebene möglich.

Weiterhin wäre es auch möglich, einen Verriegelungsmechanismus, der die beiden Blasformhälften 12 und 14 an den jeweiligen Trägerhälften 22 und 24 befestigt, zu koppeln mit einem Verriegelungsmechanismus der beiden Blasformhälften 12 und 14. So könnte diese Koppelung derart gestaltet sein, dass bei einem Entriegeln der Blasformhälften 12 und 14 gegenüber den Trägerhälften 22 und 24 gleichzeitig ein Verriegeln der beiden Blasformhälften 12 und 14 auftritt.

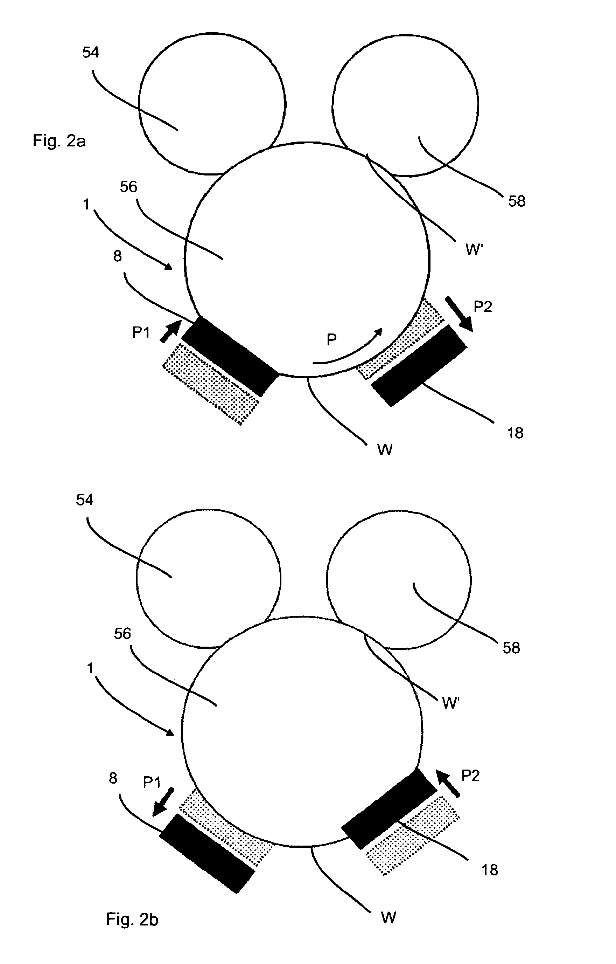

Die Fig. 2a und 2b veranschaulichen einen Demontage- bzw. Montagevorgang für eine Blasform. Dabei bezieht sich das Bezugszeichen 54 auf einen Einlaufstern, über den in einem normalen Arbeitsbetrieb der Umformeinrichtung 1 Kunststoffvorformlinge zugeführt werden. Diese Kunsststoffvorformlinge werden in einer Vielzahl von Umformeinrichtungen, welche an einem Blasrad 56 angeordnet sind, jeweils zu Kunststoffbehältnissen expandiert. Das Bezugszeichen 58 kennzeichnet einen Auslaufstern zum Abtransportieren der fertig geblasenen Kunststoffbehältnisse. Das Bezugszeichen P kennzeichnet die Drehung des Blasrads 56.

Das Bezugszeichen 8 bezieht sich auf eine erste Führungseinrichtung. Diese erste Führungseinrichtung 8 ist dabei entlang des Pfeils P1 auf das Blasrad 56 zustellbar. Die erste Führungseinrichtung 8 dient zum Lösen bzw. Trennen der Blasform von dem Blasformträger. Dabei ist es möglich, dass in einem Demontagebetrieb das Blasrad 56 mit den daran angeordneten Blasstationen bzw. Umformeinrichtungen gedreht wird und so die einzelnen Umformeinrichtungen, d.h. insbesondere auch deren Blasformträger an der Führungseinrichtung vorbeigeführt werden. Vorteilhaft wird hier das Blasrad erheblich langsamer gedreht als in einem Arbeitsbetrieb und besonderes bevorzugt findet hier auch eine kontinuierliche Bewegung statt. Es wäre jedoch auch eine getaktete Bewegung denkbar.

Durch diese Vorbeibewegung der Blasformträger an der ersten Führungseinrichtung 8 wird die mechanische Verbindung zwischen den Blasformträgern und den Blasformen gelöst. Daneben kann die in Fig. 2a gezeigte erste Führungseinrichtung 8 auch eingesetzt werden, um eine Strömungsverbindung, welche die Blasform mit einem Temperiermedium wie beispielsweise (Kühl)-wasser versorgt, zu trennen.

Das Bezugszeichen 18 bezieht sich auf eine zweite Führungseinrichtung, welche hier zum Herstellen einer haltenden Verbindung zwischen dem Blasformträger und der Blasform bzw. zum Fixieren der Blasform an dem Blasformträger dient. Auch hier werden die Blasformträger an dieser Führungseinrichtung 18 vorbeibewegt und so wird, etwa durch den Einsatz von Führungsrollen eine Verbindung hergestellt. Dieser Montagebetrieb ist in Fig. 2b dargestellt, in der die zweite Führungseinrichtung 18 (Pfeil P2) auf das Blasrad 56 zu bewegt wird und die erste Führungseinrichtung von dem Blasrad 56 wegbewegt wird (Pfeil P1).

Weiterhin kann die Vorrichtung noch Kontrollmittel aufweisen, welche sicherstellen, dass in einem normalen Arbeitsbetrieb keine der beiden Führungseinrichtungen 8, 18 auf das Blasrad 56 zugestellt ist. Daneben können Sensoren oder Kontrollmittel vorhanden sein, welche die haltende, ggfs. mechanische Verbindung zwischen der Blasform und dem Blasformträger prüfen. Weitere Kontrollmittel können auch prüfen, ob eine dichte Strömungsverbindung zwischen dem oder den Kanälen in der Blasform und dem oder den Anschlüssen hergestellt wurde.

Das Bezugszeichen W bezieht sich auf einen möglichen Punkt oder Bereich, in dem die Blasform manuell aus der Anlage entnommen werden kann. Das Bezugszeichen W' kennzeichnet einen Punkt oder Bereich, in dem die Blasform automatisch, d.h. hier über den Auslaufstern 58 aus der Anlage entnommen werden kann.

Damit kann zum Entnehmen der Blasform bzw. der Formwechselteile die Vorrichtung und die Handhabung derart konzipiert sein, dass Umrüstzeit eingespart wird. Diese Zeiteinsparung ergibt sich hauptsächlich aus dem gemeinsamen Herausnehmen bzw. Einsetzen der Blasform d. h. der beiden Formhälften 12 und 14 und der Bodenform 16 so dass nur noch ein Vorgang statt wie im Stand der Technik drei unterschiedliche Vorgänge notwendig sind.

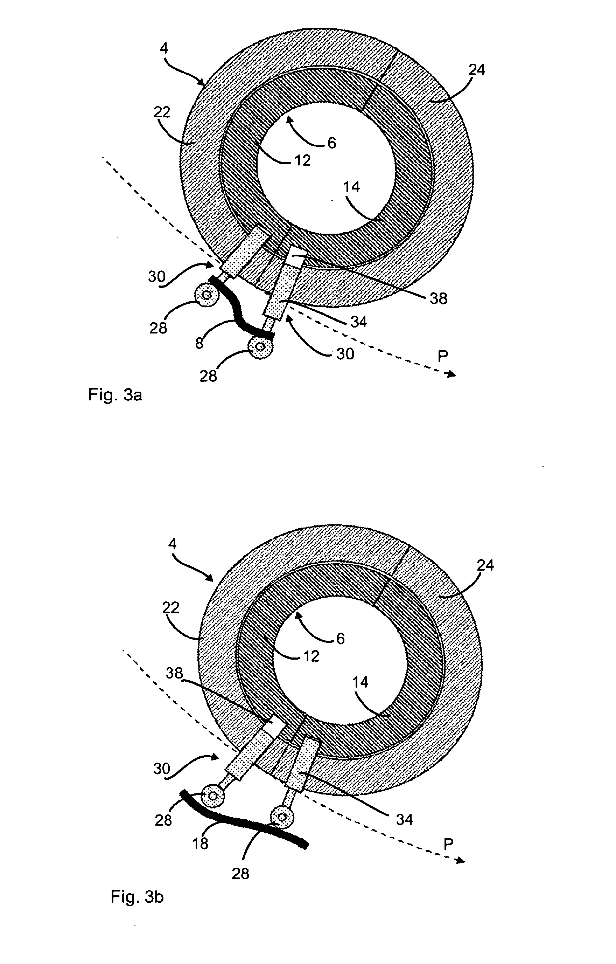

Fig. 3a zeigt eine weitere Ansicht zur Veranschaulichung eines Demontagebetriebs einer Blasform. Hier wird der Blasformträger 4 mit der darin eingesetzten Blasform 6 entlang des Pfads P, der auch dem Pfad im normalen Arbeitsbetrieb entspricht transportiert und dabei wird ein Verbindungsbolzen 34, der in Verbindung mit einer Führungsrolle 28 steht, an der ersten Führungseinrichtung 8 vorbeibewegt. Diese Bewegung bewirkt, dass der Verbindungsbolzen 34 aus einer entsprechenden Ausnehmung 38, die hier in einer Außenwandung der Blasform 6 angeordnet ist, herausgezogen wird. Das Bezugszeichen 30 kennzeichnet die haltende Verbindung in ihrer Gesamtheit.

Auf diese Weise wird die Blasform 6 von dem Blasformträger 4 gelöst. Vorteilhaft ist die Blasform in diesem Arbeitsgang zusammengesetzt, d.h. insbesondere die beiden Seitenteile 12, 14 der Blasform 6 sind miteinander verbunden. Nach dem Lösen der Blasform bzw. dem Trennen der Blasform von dem Blasformträger kann der Blasformträger geöffnet und anschließend die Blasform 6 entnommen werden. Zum Öffnen des Blasformträgers kann dabei auf die selben Mittel bzw. Führungskurven zurückgegriffen werden, die auch im Arbeitsbetrieb zum Öffnen des Blasformträgers dienen.

Fig. 3b zeigt einen entsprechenden Montagevorgang. Auch hier werden die einzelnen Blasformträger an der zweiten Führungseinrichtung 18 vorbeigeführt, wobei durch diese Bewegung der Verbindungsbolzen 34 in die Ausnehmung 38 eingeschoben wird, um so die haltende Verbindung 30 zwischen der Blasform und dem Blasformträger 4 herzustellen. Genauer kann auch hier zunächst die Blasform in zusammengesetztem Zustand gegenüber dem Blasformträger positioniert werden, anschließend der Blasformträger 4 um die Blasform 6 geschlossen werden und schließlich die mechanische Verbindung zwischen dem Blasformträger 4 und der Blasform 6 geschlossen werden. Zwischen der Blasform 6 und dem Blasformträger können dabei weitere (ebenfalls automatisch lösbare) Eingriffsmittel (nicht gezeigt) vorhanden sein, welche die Blasform 6 an dem Blasformträger 4 halten.

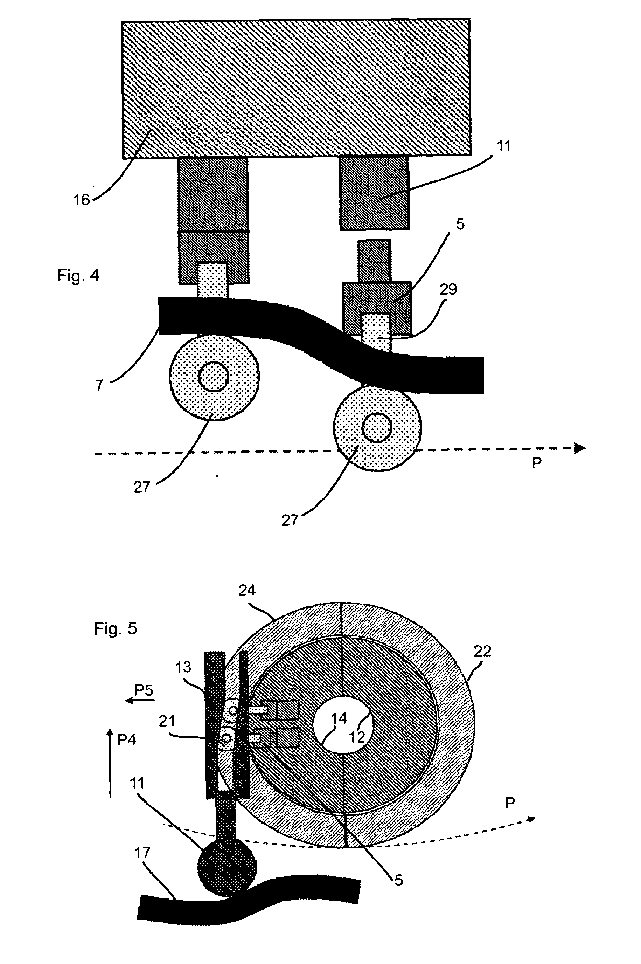

Fig. 4 zeigt eine weitere Darstellung zur Veranschaulichung der Trennung der Verbindung für ein oder mehrere Temperiermedien. Dabei ist hier ein Anschluss 5 vorgesehen, den in eine entsprechende (Schnell)Kupplung 11, die in einem Bodenteil 16 der Blasform angeordnet ist, eingeführt ist, um die Strömungsverbindung herzustellen, um so den Kanal in der Blasform mit dem Temperiermedium zu versorgen. Eine Führungskurve 7, welche hier ebenfalls vorteilhaft zustellbar ist, bewirkt bei einer Bewegung des Bodenteils 16 entlang des Pfads P, dass der Anschluss 5 aus der Kupplung 11 herausgezogen und so die Strömungsverbindung für das Temperiermedium getrennt wird. In dem Anschluss 5 kann ein Ventil vorgesehen sein, welches sich bei dieser Trennung schließt, um so zu verhindern, das Reste von Temperiermedium aus dem Anschluss 5 herauslaufen können. Auf diese Weise kann ein Temperiermittelanschluss wie insbesondere ein Wasseranschluss für die Blasform 6 gelöst werden.

Fig. 5 zeigt eine weitere Darstellung zur Veranschaulichung einer Herstellung bzw. einem Lösen einer Strömungsverbindung für ein Temperiermedium für einen Halsbereich der Blasform. Hier ist ebenfalls eine Führungskurve 17 vorgesehen, welche bei einer Bewegung der Blasform entlang des Pfeils P eine Bewegung einer Führungsrolle 11 und eines daran angeordneten Stellglieds 13 in der Richtung P4 bewirkt. Diese Bewegung wiederum führt zu einer Bewegung weiterer Führungsrollen 21 entlang des Pfeils P5 und damit zu einer Bewegung des daran angeordneten Anschlussstücks 5. Auf diese Weise kann eine Strömungsverbindung für eine Neckkühlung des Behältnisses hergestellt oder getrennt werden.

Abschließend wird darauf hingewiesen, dass im Rahmen dieser Beschreibung mit dem Begriff Blasformträger das umgebende Element 4 bezeichnet wurde und mit dem Begriff Blasform das von diesem umgebenden Element 4 aufgenommene Element 6. Es ist jedoch auch möglich und bekannt, das im Rahmen der Beschreibung mit 6 bezeichnete Element als Formträger zu bezeichnen, da dieses noch eine Mutterform aufnehmen kann, gegen deren Innenwandung das Behältnis expandiert wird. Entsprechend kann das Element 4 auch als Blasform bezeichnet werden.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Umformeinrichtung
- 2: Blasstation
- 4: Blasformträger
- 5: Anschluss
- 6: Blasform
- 7: Führungskurve
- 8: Führungskurve
- 11: Kupplung
- 12, 14: Blasformhälfte
- 13: Stellglied
- 15: Hohlraum
- 16: Bodenteil
- 17: Führungskurve
- 18: Führungskurve
- 20: Befestigungseinrichtung
- 21: Führungsrolle
- 22, 24: Trägerhälte, Blasformträger
- 27, 28: Führungsrolle
- 30: haltende Verbindung
- 31,32: Magnete
- 34: Verbindungsbolzen
- 36: Zustellelement
- 38: Ausnehmung
- 54: Einlaufstern
- 56: Blasrad
- 58: Auslaufstern

- L: Längsrichtung
- P1,P2: Pfeile
- R: radiale Richtung
- P: Pfad
- W: Punkt, Bereich

## Patentansprüche

1. Verfahren zum Betreiben einer Umformeinrichtung zum Umformen von Kunststoffvorformlingen zu Kunststoffbehältnissen, wobei diese Umformeinrichtung (2) wenigstens einen Blasformträger (4) und eine an diesem Blasformträger (4) angeordnete mehrteilige Blasform (6) aufweist und wobei eine haltende Verbindung zwischen der Blasform (6) und dem Blasformträger (4) vorgesehen ist und wobei die haltende Verbindung zwischen dem Blasformträger (4) und der Blasform (6) oder eine Temperierverbindung zum Temperieren der Blasform (6) wenigstens teilweise automatisch gelöst oder hergestellt wird
**dadurch gekennzeichnet, dass**
das Trennen oder Herstellen der haltenden Verbindung zwischen dem Blasformträger (4) und der Blasform (6) oder das Trennen oder Herstellen der Temperierverbindung zum Temperieren der Blasform (6) durch eine Bewegung des Blasformträgers (4) entlang einer kreisförmigen Bahn bewirkt wird.

2. Verfahren nach Anspruch 1,
**dadurch gekennzeichnet, dass**
die Blasform (6) wenigstens einen Kanal zum Führen eines Temperiermediums für die Blasform aufweist, sowie wenigstens einen von dem Kanal trennbaren Anschluss (5), um dem Kanal das Temperiermedium zuzuführen,
**dadurch gekennzeichnet, dass**
eine Strömungsverbindung zwischen dem Anschluss (5) und dem Kanal wenigstens teilweise automatisiert gelöst oder hergestellt wird.

3. Verfahren nach wenigstens einem der vorangegangenen Ansprüche,
**dadurch gekennzeichnet, dass**
das Trennen oder Herstellen der Strömungsverbindung zwischen dem Anschluss (5) und dem Kanal durch eine Bewegung des Blasformträgers (4) bewirkt wird.

4. Verfahren nach wenigstens einem der vorangegangenen Ansprüche,
**dadurch gekennzeichnet, dass**
für das Trennen oder Herstellen der haltenden Verbindung zwischen dem Blasformträger und der Blasform eine Transportbewegung des Blasformträgers verwendet wird, die hinsichtlich ihrer Bewegungsrichtung auch im Rahmen eines Arbeitsbetriebs vorliegt.

5. Verfahren nach wenigstens einem der vorangegangenen Ansprüche,
**dadurch gekennzeichnet, dass**
das Trennen oder Herstellen der haltenden Verbindung zwischen dem Blasformträger (4) und der Blasform (6) und das Trennen oder Herstellen der Strömungsverbindung zwischen dem Anschluss (5) und dem Kanal in einem gemeinsamen Arbeitsgang bewirkt werden.

6. Verfahren nach Anspruch 1,
**dadurch gekennzeichnet, dass**
wenigstens zum Trennen oder zum Herstellen der haltenden Verbindung oder der Strömungsverbindung zwischen dem Kanal und dem Anschluss (5) eine erste Führungseinrichtung (8) verwendet wird.

7. Verfahren nach Anspruch 6,
**dadurch gekennzeichnet, dass**
die Führungseinrichtung (8) zum Trennen der haltenden Verbindung oder zum Trennen des Anschlusses (5) von dem Kanal bewegt wird.

8. Verfahren nach wenigstens einem der vorangegangenen Ansprüche,
**dadurch gekennzeichnet, dass**
die Blasform ein Bodenteil (16) aufweist und wenigstens ein Anschluss (5) für ein Temperiermedium automatisiert mit dem Bodenteil (16) verbunden oder von dem Bodenteil (16) getrennt wird.

9. Umformeinrichtung (1) zum Umformen von Kunststoffvorformlingen zu Kunststoffbehältnissen mit einer mehrteilig ausgebildeten Blasform (6), welche einen Hohlraum ausbildet, innerhalb dessen die Kunststoffvorformlinge zu Kunststoffbehältnissen expandierbar sind, wobei die Umformeinrichtung (1) einen Blasformträger (4) aufweist, an dem die Blasform (6) lösbar über eine haltende Verbindung (30) angeordnet ist, wobei die Umformeinrichtung (1) wenigstens eine Kopplungseinrichtung (8, 18) zum wenigstens teilweisen automatischen Lösen oder Herstellen der haltenden Verbindung (30) zwischen dem Blasformträger (4) und der Blasform (6) oder zum wenigstens teilweisen automatischen Lösen oder Herstellen einer Temperierverbindung zum Temperieren der Blasform (6) aufweist
**dadurch gekennzeichnet, dass**
der Blasformträger (4) oder die Temperierverbindung zum Temperieren der Blasform (6) über einen durch eine Bewegung des Blasformträgers entlang einer kreisförmigen Bahn lösbaren Verbindungsmechanismus mit der Blasform (6) in Verbindung steht.

10. Umformeinrichtung (1) nach Anspruch 9,
**dadurch gekennzeichnet, dass**
die Blasform (6) wenigstens einen Kanal zum Führen eines Temperiermediums aufweist, und die Umformeinrichtung wenigstens einen von dem Kanal trennbaren Anschluss (5), um dem Kanal das Temperiermedium zuzuführen, wobei die Umformeinrichtung wenigstens eine Kopplungseinrichtung zum wenigstens teilweisen Trennen oder Herstellen einer Strömungsverbindung zwischen dem Anschluss und dem Kanal aufweist

11. Umformeinrichtung nach Anspruch 9,
**dadurch gekennzeichnet, dass**
die Kopplungseinrichtung wenigstens eine erste Führungseinrichtung (8) aufweist, gegenüber der der Blasformträger (4) beweglich angeordnet ist.

12. Umformeinrichtung (1) nach Anspruch 11,
**dadurch gekennzeichnet, dass**
die Führungseinrichtung (8) beweglich ist.

13. Umformeinrichtung (1) nach Anspruch 9,
**dadurch gekennzeichnet, dass**
die Kopplungseinrichtung eine zweite Führungseinrichtung (18) aufweist, gegenüber der der Blasformträger (4) beweglich angeordnet ist.

14. Umformeinrichtung (1) nach Anspruch 12,
**dadurch gekennzeichnet, dass**
die erste Führungseinrichtung (8) zum wenigstens teilweisen Trennen der haltenden Verbindung zwischen dem Blasformträger und der Blasform und/oder zum wenigstens teilweisen Trennen einer Strömungsverbindung zwischen dem Anschluss (5) und dem Kanal dient und die zweite Führungseinrichtung zum wenigstens teilweisen Herstellen der haltenden Verbindung zwischen dem Blasformträger und der Blasform und/oder zum wenigstens teilweisen Herstellen der Strömungsverbindung zwischen dem Anschluss (5) und dem Kanal dient.

## Claims

1. Method for operating a transforming device for transforming plastic preforms into plastic containers, wherein this transforming device (2) comprises at least one blow mould carrier (4) and a multi-part blow mould (6) arranged on this blow mould carrier (4), and wherein a holding connection is provided between the blow mould (6) and the blow mould carrier (4) and wherein the holding connection between the blow mould carrier (4) and the blow mould (6) or a temperature control connection for controlling the temperature of the blow mould (6) is detached or established in an at least partially automated manner, **characterised in that** the detaching or establishing of the holding connection or the detaching or establishing of the temperature control connection for controlling the temperature of the blow mould (6) are effected by a movement of the blow mold carrier along a circular path.

2. Method according to claim 1, **characterised in that** the blow mould (6) has at least one channel for guiding a temperature control medium for the blow mould, and also at least one connector (5) which can be separated from the channel and which is provided for supplying the temperature control medium to the channel, **characterised in that** a flow connection between the connector (5) and the channel is detached or established in an at least partially automated manner.

3. Method according to at least one of the preceding claims, **characterised in that** the separation or establishment of the flow connection between the connector (5) and the channel is brought about by a movement of the blow mould carrier (4).

4. Method according to at least one of the preceding claims, **characterised in that** for the separation or establishment of the holding connection between the blow mould carrier (4) and the blow mould (6) a transport movement of the blow mold carrier is used which with respect to the movement direction is also present in a working mode.

5. Method according to at least one of the preceding claims, **characterised in that** the separation or establishment of the holding connection between the blow mould carrier (4) and the blow mould (6) and the separation or establishment of the flow connection between the connector (5) and the channel are brought about in a common operating process.

6. Method according to claim 1, **characterised in that** a first guide device (8) is used at least to separate or to establish the holding connection or the flow connection between the channel and the connector (5).

7. Method according to claim 6, **characterised in that** the guide device (8) is moved in order to separate the holding connection or in order to separate the connector (5) from the channel.

8. Method according to at least one of the preceding claims, **characterised in that** the blow mould comprises a bottom part (16), and at least one connector (5) for a temperature control medium is connected to the bottom part (16) or separated from the bottom part (16) in an automated manner.

9. Transforming device (1) for transforming plastic preforms into plastic containers, comprising a multi-part blow mould (6) which forms a cavity, inside which the plastic preforms can be expanded to form plastic containers, wherein the transforming device (1) comprises a blow mould carrier (4) on which the blow mould (6) is detachably arranged via a holding connection (30), wherein the transforming device (1) comprises at least one coupling device (8, 18) for at least partially detaching or establishing the holding connection (30) between the blow mould carrier (4) and the blow mould (6) or for at least partially detaching or establishing a temperature control connection for controlling the temperature of the blow mould (6), **characterised in that** the blow mold carrier (4) or the temperature control connection for controlling the temperature of the blow mould (6) is in connection with the blow mold via a connection mechanism which is detachable by a movement of the blow mold carrier along a circular path.

10. Transforming device (1) according to claim 9, **characterised in that** the blow mould (6) has at least one channel for guiding a temperature control medium, and the transforming device has at least one connector (5) which can be separated from the channel and which is provided for supplying the temperature control medium to the channel, wherein the transforming device comprises at least one coupling device for at least partially separating or establishing a flow connection between the connector and the channel.

11. Transforming device according to claim 9, **characterised in that** the coupling device comprises at least a first guide device (8), relative to which the blow mould carrier (4) is movably arranged.

12. Transforming device (1) according to claim 11, **characterised in that** the guide device (8) is movable.

13. Transforming device (1) according to claim 9, **characterised in that** the coupling device comprises a second guide device (18), relative to which the blow mould carrier (4) is movably arranged.

14. Transforming device (1) according to claim 12, **characterised in that** the first guide device (8) serves for at least partially separating the holding connection between the blow mould carrier and the blow mould and/or for at least partially separating a flow connection between the connector (5) and the channel, and the second guide device serves for at least partially establishing the holding connection between the blow mould carrier and the blow mould and/or for at least partially establishing the flow connection between the connector (5) and the channel.

## Revendications

1. Procédé de fonctionnement d'un dispositif de transformation pour la transformation d'ébauches en matière plastique en récipients en matière plastique, ledit dispositif de transformation (2) comportant au moins un support de moule de soufflage (4) et un moule de soufflage (6) en plusieurs pièces disposé contre ledit support de moule de soufflage (4), une liaison de maintien étant prévue entre le moule de soufflage (6) et le support de moule de soufflage (4), et la liaison de maintien entre le support de moule de soufflage (4) et le moule de soufflage (6) ou une liaison de thermostatisation pour la thermostatisation du moule de soufflage (6) étant interrompue ou établie de manière au moins partiellement automatique,
**caractérisé en ce que**
l'interruption ou l'établissement de la liaison de maintien entre le support de moule de soufflage (4) et le moule de soufflage (6), ou l'interruption ou l'établissement de la liaison de thermostatisation pour la thermostatisation du moule de soufflage (6) sont déclenchés par un déplacement du support de moule de soufflage (4) sur un trajet circulaire.

2. Procédé selon la revendication 1,
**caractérisé en ce que**
le moule de soufflage (6) comporte au moins un canal pour l'amenée d'un fluide de thermostatisation pour le moule de soufflage, ainsi qu'au moins un raccord (5) séparable du canal, pour conduire le fluide de thermostatisation vers le canal,
**caractérisé en ce que**
une liaison de circulation entre le raccord (5) et le canal est interrompue ou établie de manière au moins partiellement automatique.

3. Procédé selon au moins une des revendications précédentes,
**caractérisé en ce que**
l'interruption ou l'établissement de la liaison de circulation entre le raccord (5) et le canal sont déclenchés par un déplacement du support de moule de soufflage (4).

4. Procédé selon au moins une des revendications précédentes,
**caractérisé en ce que**
pour l'interruption ou l'établissement de la liaison de maintien entre support de moule de soufflage et le moule de soufflage, il est recouru à un mouvement de transport du support de moule de soufflage, lequel est également présenté dans le cadre d'un mode de travail quant à sa direction de déplacement.

5. Procédé selon au moins une des revendications précédentes,
**caractérisé en ce que**
l'interruption ou l'établissement de la liaison de maintien entre le support de moule de soufflage (4) et le moule de soufflage (6), et l'interruption ou l'établissement de la liaison de circulation entre le raccord (5) et le canal sont effectués lors d'une seule et même phase de travail.

6. Procédé selon la revendication 1,
**caractérisé en ce qu'**
un premier dispositif de guidage (8) est utilisé au moins pour l'interruption ou l'établissement de la liaison de maintien ou de la liaison de circulation entre le canal et le raccord (5).

7. Procédé selon la revendication 6,
**caractérisé en ce que**
le dispositif de guidage (8) est déplacé pour interrompre la liaison de maintien ou pour séparer le raccord (5) du canal.

8. Procédé selon au moins une des revendications précédentes,
**caractérisé en ce que**
le moule de soufflage comporte une pièce de fond (16) et **en ce qu'**au moins un raccord (5) pour un fluide de thermostatisation est automatiquement relié à la pièce de fond (16) ou séparé de la pièce de fond (16).

9. Dispositif de formage (1) pour la transformation d'ébauches en matière plastique en récipients en matière plastique avec un moule de soufflage (6) en plusieurs pièces, lequel forme une cavité à l'intérieur de laquelle les ébauches en matière plastique peuvent être expansées pour obtenir des récipients en matière plastique, ledit dispositif de formage (1) comportant un support de moule de soufflage (4) contre lequel le moule de soufflage (6) est disposé de manière amovible par une liaison de maintien (30), ledit dispositif de formage (1) comportant au moins un dispositif d'accouplement (8, 18) pour interrompre ou établir de manière au moins partiellement automatique la liaison de maintien (30) entre le support de moule de soufflage (4) et le moule de soufflage (6), ou pour interrompre ou établir de manière au moins partiellement automatique une liaison de thermostatisation pour la thermostatisation du moule de soufflage (6),
**caractérisé en ce que**
le support de moule de soufflage (4) ou la liaison de thermostatisation pour la thermostatisation du moule de soufflage (6) sont reliés au moule de soufflage (6) au moyen d'un mécanisme de liaison amovible par déplacement du support de moule de soufflage sur un trajet circulaire.

10. Dispositif de formage (1) selon la revendication 9,
**caractérisé en ce que**
le moule de soufflage (6) comporte au moins un canal pour l'amenée d'un fluide de thermostatisation, et ledit dispositif de formage au moins un raccord (5) séparable du canal pour conduire le fluide de thermostatisation vers le canal, ledit dispositif de formage comportant au moins un dispositif d'accouplement pour interrompre ou établir au moins partiellement une liaison de circulation entre le raccord et le canal.

11. Dispositif de formage selon la revendication 9,
**caractérisé en ce que**
le dispositif d'accouplement comporte au moins un premier dispositif de guidage (8), disposé de manière à pouvoir être déplacé par rapport au support de moule de soufflage (4).

12. Dispositif de formage (1) selon la revendication 11,
**caractérisé en ce que**
le dispositif de guidage (8) est mobile.

13. Dispositif de formage (1) selon la revendication 9,
**caractérisé en ce que**
le dispositif d'accouplement comporte un deuxième dispositif de guidage (18), disposé de manière à pouvoir être déplacé par rapport au support de moule de soufflage (4).

14. Dispositif de formage (1) selon la revendication 12,
**caractérisé en ce que**
le premier dispositif de guidage (8) sert à interrompre au moins partiellement la liaison de maintien entre le support de moule de soufflage et le moule de soufflage et/ou à interrompre au moins partiellement une liaison de circulation entre le raccord (5) et le canal, et le deuxième dispositif de guidage sert à établir au moins partiellement la liaison de maintien entre le support de moule de soufflage et le moule de soufflage et/ou à établir au moins partiellement la liaison de circulation entre le raccord (5) et le canal.
